# EUROPÄISCHE PATENTSCHRIFT

(11) **EP 3 187 034 B1**
(45) Veröffentlichungstag und Bekanntmachung des Hinweises auf die Patenterteilung: **27.02.2019**
(21) Anmeldenummer: 17401000.9
(22) Anmeldetag: 02.01.2017
(51) Int. Cl.: A01C 17/00

(54) **VERFAHREN ZUR STEUERUNG UND/ODER REGELUNG EINER SENSORANORDNUNG UND SENSORANORDNUNG**
METHOD FOR CONTROLLING AND/OR REGULATING A SENSOR ASSEMBLY AND SENSOR ASSEMBLY
PROCÉDÉ DE COMMANDE ET/OU DE RÉGLAGE D'UN SYSTÈME DE DÉTECTION ET SYSTÈME DE DÉTECTION

(30) Priorität: 04.01.2016 DE 102016100048
(43) Veröffentlichungstag der Anmeldung: 05.07.2017
(73) Patentinhaber: Amazonen-Werke H. Dreyer GmbH & Co. KG, 49205 Hasbergen (DE)
(72) Erfinder: Rahe, Florian, 49504 Lotte (DE)

(56) Entgegenhaltungen:
- EP-A2- 2 767 149
- EP-B1- 0 751 703
- WO-A1-2015/058273
- US-A- 5 936 234

## Beschreibung

Die Erfindung betrifft ein Verfahren zur Steuerung und/oder Regelung einer Sensoranordnung zur Reduktion des Rauschniveaus dieser Sensoranordnung gemäß des Oberbegriffs des Patentanspruches 1.
Eine Sensoranordnung zur Messung der Verteilparameter, wie beispielsweise Verteilmenge, Flugrichtung, Geschwindigkeit, Querverteilung oder Ähnliches einer landwirtschaftlichen Verteilmaschine ist beispielsweise in DE19723359A1, EP0751703B1 und EP300580B1 beschrieben. Alle diese Schriften zeigen eine Anordnung von einem oder mehreren Sensoren zur Abtastung des Streugutes einer Verteilmaschine. Da die verwendeten Signale der Sensoranordnung, wie beispielsweise elektromagnetische Wellen oder Ultraschall an einer Vielzahl von Objekten, nicht nur dem zu verteilenden Gut gestreut oder reflektiert werden und auch von einem Sensor zu einem anderen Sensor gestreut werden, ist es wünschenswert den Einfluss dieser störenden Signale auf die Messung zu minimieren und/oder soweit wie möglich zu berücksichtigen. Für eine Anordnung mehrerer Sensoren wird in EP2272312B1 vorgeschlagen, die störenden Einflüsse der Sensoren untereinander durch zeitlich versetzte Messungen zu bewerkstelligen. Eine kontinuierliche Messung mit allen verwendeten Sensoren ist dadurch allerdings ausgeschlossen.
Aufgabe der vorliegenden Erfindung ist es, eine möglichst rauscharme, störungsfreie Messung einer Sensoranordnung zu gewährleisten.
Dies wird in einfacher Weise durch ein Verfahren zur Steuerung und/oder Regelung einer Sensoranordnung gemäß dem Oberbegriff des Patentanspruchs 1 erreicht, indem zur Reduktion des Rauschniveaus zumindest eines Detektorsignals jede der zumindest zwei Sender-Detektor-Kombinationen mit einer individuell unterschiedlichen, festgelegten oder variablen Sendefrequenz betrieben wird. Die Sendefrequenz kann hierbei entweder variabel oder fest vorgegeben und damit festgelegt sein. Die Sendefrequenz kann häufig durch eine Variation der Versorgungsspannung geändert werden. In diesem Fall wird die durch ein geeignetes Steuergerät vorgegebene Versorgungsspannung für die einzelnen Sender-Detektor-Kombinationen derart gewählt, dass diese sich zu jedem Zeitpunkt um mindestens einen festgelegten Wert von vorzugsweise 0,05 V unterscheiden. Da Temperatur und sonstige äußere Einflüsse auf die Sender-Detektor-Kombinationen ungefähr gleich sind und auch die Abhängigkeit der Senderfrequenz von der Versorgungsspannung auf Grund niedriger Fertigungstoleranzen sehr reproduzierbar ist, reicht ein solch kleiner Unterschied in der Versorgungsspannung um sicherzustellen, dass die Sender-Detektor-Kombinationen in unterschiedlichen Frequenzbereichen arbeiten.

Auf diese Weise kann für eine Kombination aus mehreren Sensoren die Frequenz der den Sensoren zugeordneten Sender für die verwendeten Wellen, beispielsweise Radarstrahlen oder Ultraschallwellen, so abgestimmt werden, dass die Frequenzen der Sender sich ausreichend unterscheiden, damit nicht die Signale, welche von einem Sensor, bestehend aus einer Sender-Empfänger-Kombination, ausgesandt werden, von einem anderen Sensor oder anders ausgedrückt, dem einem Sensor zugeordneten Empfänger oder Detektor als Störsignal wahrgenommen werden. Somit kann für eine Kombination aus zumindest einem ersten und einem zweiten Sensor ein störender Einfluss des beispielsweise dem ersten Sensor zugeordneten Senders auf den dem zweiten Sensor zugeordneten Detektor unterbunden werden.

Der Detektor wird hierbei als Teil einer Kombination aus Sender und Detektor oder Empfänger von elektromagnetischer Strahlung oder Ultraschall und der zugehörigen zur Steuerung dieser Komponenten benötigten Elektronik verstanden. Diese Kombination kann auch als Sensor bezeichnet werden, wobei Sender und/oder Empfänger und/oder die zugehörige Elektronik hierbei in einem Bauteil oder auch getrennt angeordnet sein können. In solcher Form werden unter anderem moderne Radarsensoren hergestellt, die im Sensor schon das ausgesendete und empfangene Signal mischen und als Sensorsignal ein Dopplersignal liefern.

In einer vorteilhaften Ausgestaltung der Erfindung, wird die Sendefrequenz der Sender-Detektor-Kombination durch die Position der Sender-Detektor-Kombination innerhalb der Sensoranordnung festgelegt. Somit ist eine einfache und nachvollziehbare Wahl von unterschiedlichen Frequenzbereichen für die unterschiedlichen Sensoren zur Rauschreduktion sichergestellt.

In einer alternativen Ausgestaltung der Erfindung nach dem Oberbegriff des unabhängigen Anspruchs 3 wird zur Reduktion des Rauschniveaus zumindest eines Detektorsignals die Sendefrequenz zumindest einer Sender-Detektor-Anordnung periodisch moduliert. Auf diese Weise kann, weil der exakte Frequenzbereich der Sender-Detektor-Kombinationen unbekannt ist, die Wahrscheinlichkeit, dass Überlappungen der Frequenzbereiche der verschiedenen Sender-Detektor-Kombinationen bzw. Sensoren auftreten, stark reduziert werden. Um diese Wahrscheinlichkeit weiter zu minimieren kann in einer vorteilhaften Weiterbildung die Frequenz der Modulation der Versorgungsspannung der Sender-Detektor-Kombination durch die Position der Sender-Detektor-Kombination innerhalb der Sensoranordnung festgelegt sein. Auf diese Weise kann es allenfalls zu zufälligen und sehr kurzzeitigen Überlappungen der Frequenzbereiche von zwei oder mehr Sender-Detektor-Kombinationen kommen.

In einer besonders vorteilhaften Ausgestaltung wird die Änderung der Sendefrequenz durch eine Änderung der Versorgungsspannung oder durch eine Änderung eines Eingangssignals am Sensor hervorgerufen. Auf diese Weise kann besonders einfach die Sendefrequenz des Senders von außen gesteuert werden.

Da neben der Frequenz der Sender-Detektor-Kombinationen auch die Signalamplitude von der Versorgungsspannung abhängt, ist es entsprechend einer Vorteilhaften Weiterbildung zweckmäßig, wenn ein Kalibrierfaktor in zumindest einem Sender und/oder Detektor und/oder einem dem Sender zugordneten Speicher abgelegt ist, welcher zur Berechnung der versorgungsspannungsabhängigen Variation der Signalamplitude geeignet ist. Ansonsten würden Sender-Detektor-Kombinationen bzw. Sensoren mit niedrigerer Versorgungsspannung beispielsweise ein niedrigeres Detektionssignal liefern, welches nicht durch die Messung selbst, sondern durch den Betrieb des Sensors bedingt wäre und welches somit die Messung der Sensoranordnung verfälschen würde. Ein Solcher Kalibrier- oder Korrekturfaktor würde also auf einfache Weise die Genauigkeit des Messergebnisses verbessern.

In einer besonders vorteilhaften Ausgestaltung der Erfindung wird diese bei einem Schleuderstreuer eingesetzt.

Es wird ferner eine Sensoranordnung eines Schleuderstreuers entsprechend des Oberbegriffs des unabhängigen Anspruchs 7 beansprucht, welche zur Durchführung zumindest eines der Verfahren nach Anspruch 1 bis 6 geeignet ist.

Weitere Einzelheiten der Erfindung sind der Beispielsbeschreibung zu entnehmen. Die Zeichnungen zeigen
- Fig.1: ein Düngerstreuer mit zwei Sensoranordnungen in perspektivischer Ansicht sowie die Reflexion eines Sensorsignals am Untergrund und
- Fig.2: ein Düngerstreuer mit zwei Sensoranordnungen nach Fig. 1 in Ansicht von oben und Reflexion eines Sensorsignals beispielhaft an einem Partikel aus einer Vielzahl von abgeworfenen Partikeln.

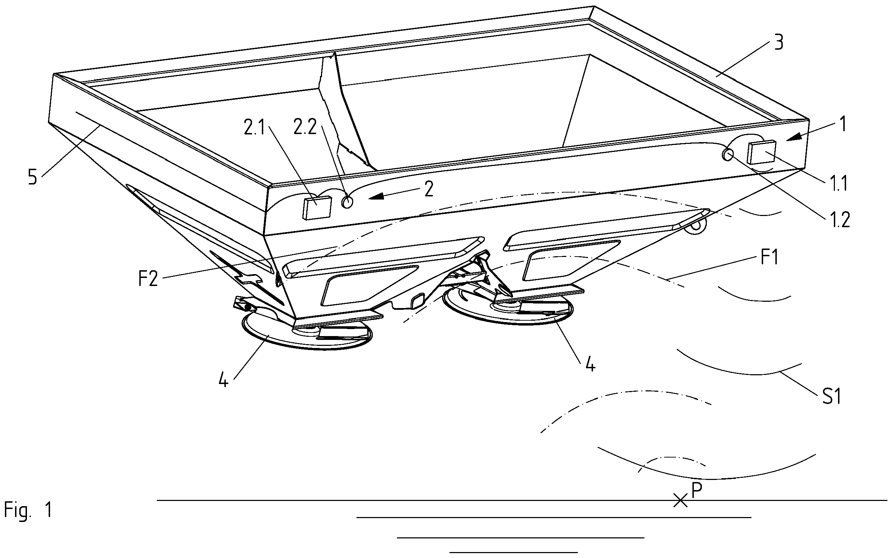

In Fig. 1 sind beispielhaft zwei Sensoren 1 und 2 einer Sensoranordnung, welche jeweils aus einem Sender elektromagnetischer Wellen 1.1 sowie 2.1 und jeweils einem entsprechenden Detektor elektromagnetischer Wellen 1.2 sowie 2.2 bestehen, dargestellt. Sowohl dem Detektor, als auch dem Sender kann überdies eine Elektronik zur Steuerung zugeordnet sein, welche sich im selben Bauteil oder außerhalb befinden kann. Beide Sensoren sind hier beispielhaft an einem Schleuderstreuer 3 mit zwei Schleuderscheiben 4 angeordnet und derart ausgerichtet, dass die zumindest überwiegende Anzahl der verteilten Streugutpartikel auf ihrer Flugbahn zumindest einen der Detektionsbereiche der beiden Sensoren passiert. Hierbei ist nicht erfindungswesentlich, dass es sich um genau zwei Sensoren handelt. Es können auch mehr als zwei Sensoren durch das erfindungsgemäße Verfahren gesteuert und/oder geregelt werden. Zur Durchführung des Verfahrens sind die Sensoren 1 und 2 hier mittels eines Kabels 5 miteinander und mit einem hier nicht dargestellten Jobrechner des Schleuderstreuers oder eines Zugfahrzeugs in bekannter Weise verbunden. Die Verbindung kann jedoch auch über beliebige andere Datenübertragungsverfahren hergestellt werden, beispielsweise über eine drahtlose Funk-, Bluetooth- oder WLan-Verbindung.

Zur möglichst einfachen Minimierung des Rauschens der Sensoranordnung kann hierbei durch den Jobrechner jeder Sensor 1, 2 mit einer festgelegten und von Sensor zu Sensor unterschiedlichen Spannung versorgt werden. Da die äußeren Einflüsse auf die verschiedenen Sensoren 1, 2 vergleichbar sind und die Sensoren bei festgelegter Spannung ab Werk nur eine geringe Varianz in der Frequenz der ausgesendeten Wellen aufweisen, genügt ein geringer Unterschied in der Versorgungsspannung der Sensoren von vorzugsweise zumindest 0,05 V, um zuverlässig für unterschiedliche Frequenzbereiche der jeweils ausgesendeten Wellen zu sorgen. Auf diese Weise kann das Rauschen des Messsignals, welches durch ein Übersprechen der ausgesendeten Wellen eines Senders 1.1 auf einen Detektor 2.1 einer anderen Sender-Detektor-Kombination 2 hervorgerufen wird, zuverlässig minimiert werden. Die jeweilige Versorgungsspannung kann hierbei durch die Position der Sensoren in der Sensoranordnung festgelegt sein.

Somit werden die durch den Sender 1.1 ausgesendeten elektromagnetischen Wellen S1, welche an einem Objekt, in diesem Fall einer Stelle des Untergrundes P wie F1 und F2 gestreut werden, so dass sie beispielsweise sowohl den Detektor 2.1 als auch Detektor 2.2 erreichen, von letzterem auf Grund der unterschiedlichen Versorgungsspannung, nicht detektiert. Die elektromagnetischen Wellen können ebenso an dem Düngerstreuer oder anderen Objekten gestreut werden. Für die Minimierung des Rauschniveaus und/oder die Optimierung des Signal-zu-Rausch-Verhältnisses ist es entscheidend, dass die Frequenz, welche durch den Sender und den Detektor einer Sensoranordnung verwendet wird, ausreichend von der Frequenz aller anderen verwendeten Sensoranordnungen abweicht.

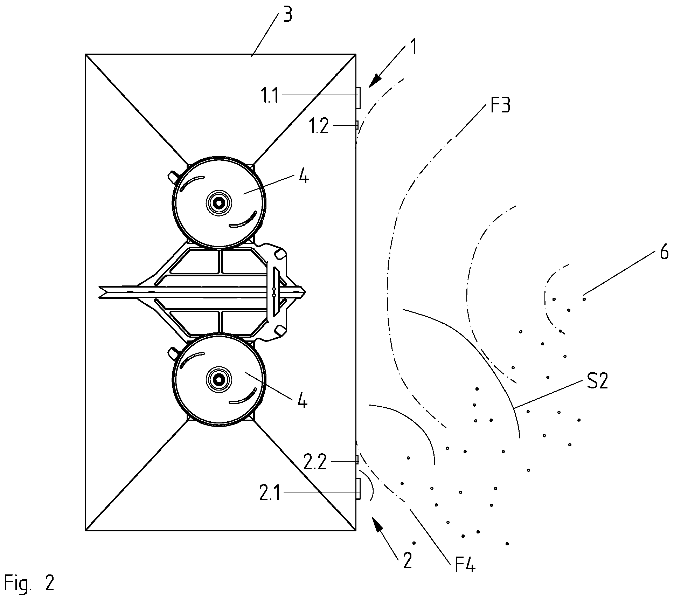

Werden nun mittels der am Düngerstreuer 3 angeordneten Schleuderscheiben 4 Streupartikel abgeworfen, wie dargestellt in Fig. 2, so kann mittels der verwendeten elektromagnetischen Sensoren 1 und 2, beispielsweise Radarsensoren, beispielsweise der mittlere Abwurfwinkel oder die Umfangsverteilung oder die mittlere Geschwindigkeit der Partikel detektiert werden. Hierbei erfährt das detektierte zuvor beispielsweise an dem sich bewegenden Düngerpartikel 6 gestreute oder reflektierte Signal auf Grund des Dopplereffektes eine Frequenzänderung. Die von dem Sender 2.1 der Sensoranordnung 2 ausgesendeten elektromagnetischen Wellen S2 werden an dem Düngerpartikel 6 reflektiert und/oder gestreut und das Dopplersignal F4 von dem Detektor 2.2 der Sensoranordnung 2 empfangen. Überdies kann das Signal S2 an dem Düngerpartikel 6 in Richtung der Sensoranordnung 1 gemäß dem Verlauf des Signals F3 gestreut werden. Für den Fall, dass die Frequenz des Senders 2.1 nah bei der Frequenz des Empfängers 1.2 liegt, kann es so zu einer falschen Interpretation der durch den Detektor 1.2 gemessenen Signale kommen. Dieser Effekt kann durch das zuvor beschriebene Einstellverfahren vermieden oder zumindest reduziert werden.

Das Verfahren ist nicht auf die hier beschriebene beispielhafte Ausgestaltung beschränkt. So kann es auch für die Detektion anderer Objekte als die hier beispielhaft angeführten Düngerpartikel, verteilt mittels eines Düngerstreuers, angewendet werden. Auch ist denkbar, dass die Einstellung der Frequenz der Sensoranordnungen durch einen sogenannten Master-Sensor und nicht notwendigerweise durch einen Jobrechner gesteuert durchgeführt wird. Auch ist es möglich das Verfahren auf mehr als zwei Sensoren anzuwenden. Auch kann vorgesehen sein, das Verfahren mit angepassten Spannungswerten erneut durchzuführen sobald das Rauschniveau einen Grenzwert überschritten oder das Signal-zu-Rausch-Verhältnis einen Grenzwert unterschritten hat.

## Patentansprüche

1. Verfahren zur Steuerung und/oder Regelung einer Sensoranordnung einer landwirtschaftlichen Verteilmaschine (3) zur Detektion zumindest eines Parameters, wie der Position, der Geschwindigkeit und/oder anderer Parameter, zumindest eines sich bewegenden Objektes, insbesondere die Streugutpartikel (6) des Streugutes einer landwirtschaftlichen Verteilmaschine (3), dessen zumindest einer Verteilparameter, wie beispielsweise die Querverteilung oder die Wurfrichtung, mittels der Sensoranordnung bestimmt wird, bestehend aus zumindest zwei Sender-Detektor-Kombinationen (1,2) zur Detektion von elektromagnetischen Wellen (S1, S2), vorzugsweise Radarstrahlen, oder Schallwellen, **dadurch gekennzeichnet, dass** die Senderfrequenz von zumindest einem Sender (1.1, 2.1) derart angepasst wird, dass das Signal-zu-Rausch-Verhältnis zumindest eines Detektors (1.2, 2.2) erhöht und/oder das Rauschen zumindest eines Detektorsignals reduziert wird, wobei zur Reduktion des Rauschniveaus zumindest eines Detektorsignals jede der zumindest zwei Sender-Detektor-Kombinationen (1, 2) mit einer individuell unterschiedlichen, festgelegten oder variablen Sendefrequenz betrieben wird.

2. Verfahren nach Anspruch 1, **dadurch gekennzeichnet, dass** die Sendefrequenz der Sender-Detektor-Kombination (1, 2) durch die Position der Sender-Detektor-Kombination innerhalb der Sensoranordnung festgelegt ist.

3. Verfahren zur Steuerung und/oder Regelung einer Sensoranordnung zur Detektion zumindest eines Parameters, wie der Position, der Geschwindigkeit und/oder anderer Parameter, zumindest eines sich bewegenden Objektes bestehend aus zumindest zwei Sender-Detektor-Kombinationen (1, 2) zur Detektion von elektromagnetischen Wellen (S1, S2), vorzugsweise Radarstrahlen, oder Schallwellen, wobei die Senderfrequenz von zumindest einem Sender (1.1, 2.1) derart angepasst wird, dass das Signal-zu-Rausch-Verhältnis zumindest eines Detektors (1.2, 2.2) erhöht und/oder das Rauschen zumindest eines Detektorsignals reduziert wird, **dadurch gekennzeichnet, dass** zur Reduktion des Rauschniveaus zumindest eines Detektorsignals die Sendefrequenz zumindest einer Sender-Detektor-Anordnung (1, 2) periodisch moduliert wird.

4. Verfahren nach Anspruch 3, **dadurch gekennzeichnet, dass** die Frequenz der Modulation der Sendefrequenz der Sender-Detektor-Kombination (1, 2) durch die Position der Sender-Detektor-Kombination innerhalb der Sensoranordnung festgelegt ist.

5. Verfahren nach zumindest einem der Ansprüche 1 - 4, **dadurch gekennzeichnet, dass** die Änderung der Sendefrequenz durch eine Änderung der Versorgungsspannung oder durch eine Änderung eines Eingangssignals am Sensor hervorgerufen wird.

6. Verfahren nach zumindest einem der Ansprüche 1 - 5, **dadurch gekennzeichnet, dass** ein Kalibrierfaktor in zumindest einem Sender (1.1, 2.1) und/oder Detektor (1.2, 2.2) und/oder einem dem Sender zugordneten Speicher abgelegt ist, welcher zur Berechnung der versorgungsspannungsabhängigen Variation der Signalamplitude geeignet ist.

7. Sensoranordnung für einen Schleuderstreuer (3) zur Detektion zumindest eines Parameters, wie der Position, der Geschwindigkeit, der Querverteilung, der Wurfrichtung und/oder anderer Parameter des verteilten Streugutes, mittels der durch zumindest zwei Sender-Detektor-Kombinationen (1, 2) ausgesendeten elektromagnetischen Wellen (S1, S2) oder Schallwellen, **dadurch gekennzeichnet, dass** die Sensoranordnung zur Durchführung zumindest eines der Verfahren nach Anspruch 1 - 6 ausgebildet ist.

## Claims

1. Method for controlling and/or regulating a sensor arrangement in an agricultural distribution machine (3) for detecting at least one parameter, such as the position, the speed and/or other parameters, of at least one moving object, in particular the spreadable material particles (6) of the spreadable material of an agricultural distribution machine (3), the at least one distribution parameter of which, for example the lateral distribution or the throwing direction, is determined by means of the sensor arrangement, comprising at least two transmitter/detector combinations (1, 2) for detecting electromagnetic waves (S1, S2), preferably radar beams, or sound waves, **characterized in that** the transmitter frequency of at least one transmitter (1.1, 2.1) is adapted in such a manner that the signal-to-noise ratio of at least one detector (1.2, 2.2) is increased and/or the noise of at least one detector signal is reduced, wherein, in order to reduce the noise level of at least one detector signal, each of the at least two transmitter/detector combinations (1, 2) is operated with an individually different, stipulated or variable transmission frequency.

2. Method according to Claim 1, **characterized in that** the transmission frequency of the transmitter/detector combination (1, 2) is determined by the position of the transmitter/detector combination inside the sensor arrangement.

3. Method for controlling and/or regulating a sensor arrangement for detecting at least one parameter, such as the position, the speed and/or other parameters, of at least one moving object, comprising at least two transmitter/detector combinations (1, 2) for detecting electromagnetic waves (S1, S2), preferably radar beams, or sound waves, wherein the transmitter frequency of at least one transmitter (1.1, 2.1) is adapted in such a manner that the signal-to-noise ratio of at least one detector (1.2, 2.2) is increased and/or the noise of at least one detector signal is reduced, **characterized in that,** in order to reduce the noise level of at least one detector signal, the transmission frequency of at least one transmitter/detector arrangement (1, 2) is periodically modulated.

4. Method according to Claim 3, **characterized in that** the frequency for the modulation of the transmission frequency of the transmitter/detector combination (1, 2) is determined by the position of the transmitter/detector combination inside the sensor arrangement.

5. Method according to at least one of Claims 1-4, **characterized in that** the change in the transmission frequency is caused by a change in the supply voltage or by a change in an input signal at the sensor.

6. Method according to at least one of Claims 1-5, **characterized in that** a calibration factor is stored in at least one transmitter (1.1, 2.1) and/or detector (1.2, 2.2) and/or a memory assigned to the transmitter, which calibration factor is suitable for calculating the supply-voltage-dependent variation in the signal amplitude.

7. Sensor arrangement for a centrifugal spreader (3) for detecting at least one parameter, such as the position, the speed, the lateral distribution, the throwing direction and/or other parameters, of the distributed spreadable material by means of the electromagnetic waves (S1, S2) or sound waves emitted by at least two transmitter/detector combinations (1, 2), **characterized in that** the sensor arrangement is designed to carry out at least one of the methods according to Claims 1-6.

## Revendications

1. Procédé de commande et/ou de régulation d'un arrangement capteur d'une épandeuse agricole (3) servant à la détection d'au moins un paramètre, comme la position, la vitesse et/ou d'autres paramètres, d'au moins un objet qui se déplace, notamment les particules de matière à épandre (6) de la matière à épandre d'une épandeuse agricole (3), dont au moins un paramètre d'épandage, comme par exemple l'épandage transversal ou le sens de projection, est défini au moyen de l'arrangement capteur, composé d'au moins deux combinaisons d'émetteur-détecteur (1, 2) servant à la détection d'ondes électromagnétiques (S1, S2), de préférence des rayons radar ou des ondes acoustiques,
**caractérisé en ce que**
la fréquence d'émission d'au moins un émetteur (1.1, 2.1) est adaptée de telle sorte que le rapport signal/bruit d'au moins un détecteur (1.2, 2.2) est augmenté et/ou le bruit d'au moins un signal de détecteur est réduit,
en vue de réduire le niveau de bruit d'au moins un signal de détecteur, chacune des au moins deux combinaisons d'émetteur-détecteur (1, 2) fonctionnant avec une fréquence d'émission individuelle différente, fixe ou variable.

2. Procédé selon la revendication 1, **caractérisé en ce que** la fréquence d'émission de la combinaison d'émetteur-détecteur (1, 2) est fixée par la position de la combinaison d'émetteur-détecteur à l'intérieur de l'arrangement capteur.

3. Procédé de commande et/ou de régulation d'un arrangement capteur servant à la détection d'au moins un paramètre, comme la position, la vitesse et/ou d'autres paramètres, d'au moins un objet qui se déplace, composé d'au moins deux combinaisons d'émetteur-détecteur (1, 2) servant à la détection d'ondes électromagnétiques (S1, S2), de préférence des rayons radar ou des ondes acoustiques, la fréquence d'émission d'au moins un émetteur (1.1, 2.1) étant adaptée de telle sorte que le rapport signal/bruit d'au moins un détecteur (1.2, 2.2) est augmenté et/ou le bruit d'au moins un signal de détecteur est réduit, **caractérisé en ce qu'**en vue de réduire le niveau de bruit d'au moins un signal de détecteur, la fréquence d'émission d'au moins un arrangement d'émetteur-détecteur (1, 2) est modulée.

4. Procédé selon la revendication 3, **caractérisé en ce que** la fréquence de modulation de la fréquence d'émission de la combinaison d'émetteur-détecteur (1, 2) est fixée par la position de la combinaison d'émetteur-détecteur à l'intérieur de l'arrangement capteur.

5. Procédé selon au moins l'une des revendications 1 à 4, **caractérisé en ce que** la modification de la fréquence d'émission est provoquée par une modification de la tension d'alimentation ou par une modification d'un signal d'entrée au niveau du capteur.

6. Procédé selon au moins l'une des revendications 1 à 5, **caractérisé en ce qu'**un facteur d'étalonnage est stocké dans au moins un émetteur (1.1, 2.1) et/ou un détecteur (1.2, 2.2) et/ou une mémoire associée à l'un des émetteurs, lequel convient pour le calcul de la variation dépendante de la tension d'alimentation de l'amplitude du signal.

7. Arrangement capteur pour une épandeuse à projection (3) servant à la détection d'au moins un paramètre, comme la position, la vitesse, l'épandage transversal, le sens de projection et/ou d'autres paramètres de la matière à épandre épandue, au moyen des ondes électromagnétiques (S1, S2) ou des ondes acoustiques émises par au moins deux combinaisons d'émetteur-détecteur (1, 2), **caractérisé en ce que** l'arrangement capteur est conçu pour mettre en oeuvre au moins l'un des procédés selon les revendications 1 à 6.
